Europäisches Patentamt

**European Patent Office**

**Office européen des brevets**

(11) Numéro de publication: **0 172 291**

**B1**

(12) **FASCICULE DE BREVET EUROPÉEN**

(45) Date de publication du fascicule du brevet:
25.11.87

(51) Int. Cl.⁴: **F 16 M 11/12**

(21) Numéro de dépôt: **84401690.7**

(22) Date de dépôt: **20.08.84**

(54) **Mécanisme polyarticulé rétractile.**

(43) Date de publication de la demande:
**26.02.86 Bulletin 86/9**

(45) Mention de la délivrance du brevet:
**25.11.87 Bulletin 87/48**

(84) Etats contractants désignés:
**AT BE CH DE GB IT LI LU NL SE**

(56) Documents cité:
**EP-A-0 109 201**
**CH-A-103 017**
**CH-A-549 260**
**DE-A-2 837 418**
**FR-A-597 556**
**FR-A-990 627**
**FR-A-2 542 419**
**GB-A-983 560**
**GB-A-1 262 351**
**US-A-2 027 386**
**US-A-3 411 324**
**US-A-3 419 238**
**US-A-3 428 286**
**US-A-4 183 489**
**US-A-4 367 591**

(73) Titulaire: **SOCIETE BAUDUIN- BECART S.A., Zone Industrielle No. 1, F-59224 Thiant (FR)**

(72) Inventeur: **Lambert, Michel, 39 La Pommeraie, F-80680 Sains En Amienois (FR)**

(74) Mandataire: **Ecrepont, Robert, Cabinet Ecrepont 12 Place Simon Vollant (Porte de Paris), F-59800 Lille (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

L'invention se rapporte à un mécanisme polyarticulé rétractile.

Ce mécanisme constitue une structure de liaison entre deux pièces extrêmes, qui trouve plus particulièrement mais non exclusivement application dans les domaines:
- des manipulateurs, tels qu'un bras ou poignet de robot,
- des plateformes élévatrices et orientables telles que les positionneurs de soudage,
- des tourelles supports d'arme, de réflecteur, d'antenne,
- des joints d'accouplement extensibles,
- des dispositifs d'accostage et d'ancrage,
- des structures érectables rigides ou déformables tels que mâts et barrières flottantes,
- des engins de franchissement,
- des véhicules tout-terrain à locomotion péristaltique, par arpentage ou par culbute.

Evidemment, dans tous les domaines, il existe déjà de très nombreux mécanismes polyarticulés réalisant des structures de liaison plus ou moins complexes entre deux pièces extrêmes.

La plupart de ces mécanismes utilisent principalement des combinaisons de liaisons élémentaires de type prismatique ou rotoïde, les pièces constitutives n'étant généralement assemblées qu'une fois avec la précédente et la suivante.

Les pièces constitutives, les organes de liaison les actionneurs et leurs systèmes de commande sont toujours de types très différents.

Les mécanismes utilisés industriellement à ce jour possèdent un nombre de degrés de mobilité limité généralement aux strictes conditions cinématiques à satisfaire. En effet, la réalisation de structures possédant un nombre de degrés de mobilité élevé et redondant pose de nombreux problèmes théoriques, pratiques, économiques.

Un résultat que l'invention vise à obtenir est un mécanisme polyarticulé rétractile qui serait constitué d'au moins un mécanisme élémentaire assurant entre deux pièces extrêmes une liaison à trois degrés de mobilité qui consistent en une translation et deux rotations autour d'axes orthogonaux à l'axe de la translation.

Un autre résultat que l'invention vise à obtenir est un tel mécanisme qui permette d'orienter relativement les parties extrêmes sans qu'il y ait de rotation relative des section suivant les tangentes à la fibre moyenne de la structure.

A cet effet, elle a pour objet un mécanisme du type cité plus haut notamment caractérisé en ce qu'il comprend au moins un mécanisme élémentaire constitué de deux pièces extrêmes, dont un référentiel, reliées entre elles par au moins trois branches situées dans des plans distincts et composées de deux parties associées chacune, d'une part, à l'autre partie formant la même branche par une liaison sphérique et, d'autre part, à une pièce extrême différente de celle à laquelle est associée cette autre partie par une liaison rotoïde.

Elle sera bien comprise à l'aide de la description ci-après faite, à titre d'exemple non limitatif en regard du dessin ci-annexé qui représente schématiquement:
- figure 1: le graphe d'agencement d'un mécanisme élémentaire,
- figure 2: un mécanisme élémentaire modélisé par une structure, réticulée,
- figure 3: un mécanisme élémentaire modélisé par des pièces monoblocs,
- figure 4: un mécanisme polyarticulé constitué plusieurs mécanismes élémentaires juxtaposés,
- figure 5: un mécanisme élémentaire modélisé sous forme mixte,
- figures 6 et 7: des variantes d'une liaison composée, globalement équivalente à une liaison sphérique,
- figure 8: une variante de réalisation dans laquelle la branche utilise des pièces à flexibilité orientée,
- figure 9: le schéma de l'articulation virtuelle obtenue avec la branche représentée figure 8,
- figure 10: un mécanisme polyarticulé modélisé au niveau de sa fibre moyenne,
- figures 11 à 13: différents dispositifs de couplage cinématique.

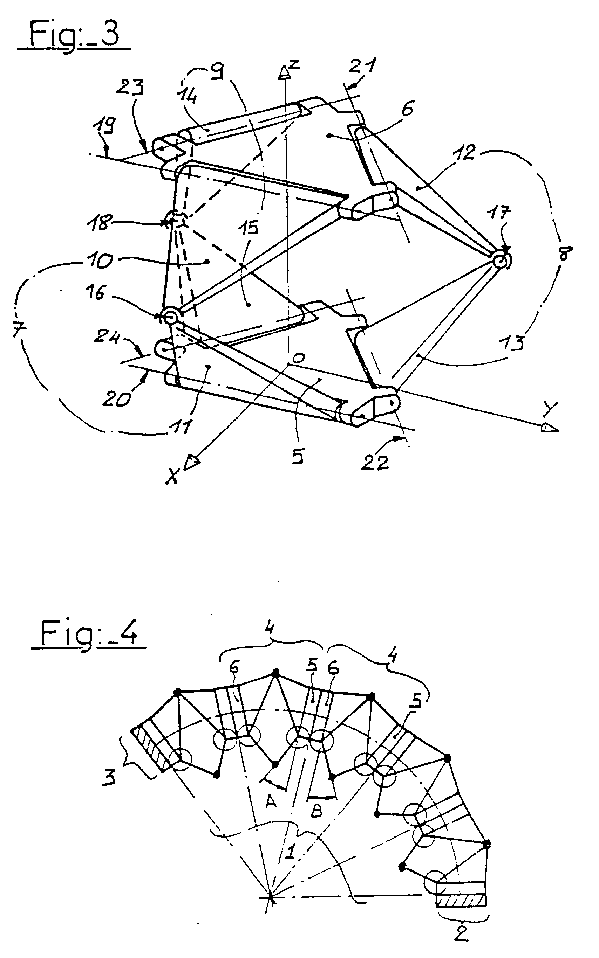

En se reportant au dessin, on voit (figure 4) que le mécanisme polyarticulé et rétractile 1 constitue une structure de liaison entre deux pièces extrêmes 2, 3, dont l'une est prise comme référentiel 2 et que cet ensemble comprend, soit un seul mécanisme élémentaire 4, soit plusieurs de ces mécanismes qui sont avantageusement juxtaposés par leurs pièces extrêmes en vis à vis 5, 6 et ce directement ou par l'intermédiaire d'au moins un élément intercalaire (non représenté) de structure différente.

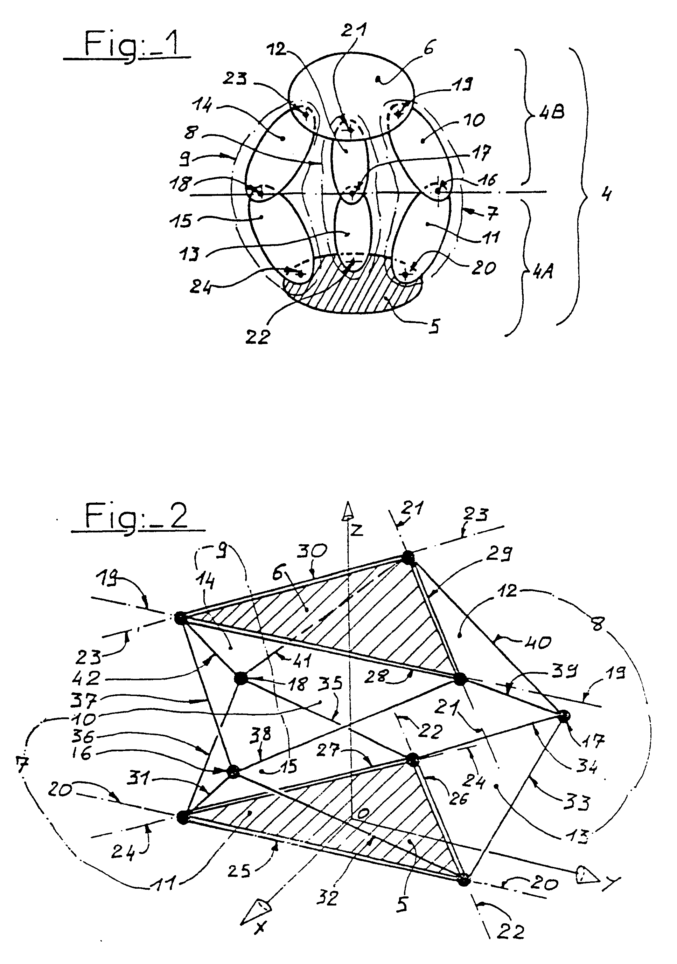

Un mécanisme élémentaire 4 (figures 1, 2 et 3) comprend donc lui-même deux pièces extrêmes 5, 6 dont un référentiel 5 reliées entre elles par au moins trois branches 7, 8, 9 situées dans des plans distincts et constituées de deux parties 10 et 11, ou 12 et 13, ou 14 et 15, associées chacune d'une part, à l'autre partie formant la même branche par une liaison au moins assimilable à une liaison sphérique 16, 17 et 18 et, d'autre part, à une pièce extrême 5, 6 différente de celle à laquelle est associée cette autre partie par une liaison au moins assimilable à une liaison rotoïde soit 19 ou 20, soit 21 ou 22, soit enfin 23 ou 24.

Les liaisons sphériques 16, 17 et 18 scindent fictivement le mécanisme élémentaire 4 en deux demi-éléments alternés $4_a$, $4_b$ (figure 1).

La disposition des axes des liaisons rotoïdes 20, 22, 24 ou 19, 21, 23 sera à priori quelconque par rapport respectivement aux pièces 5 et 6. Cependant, si les axes des liaisons rotoïdes 20, 22, 24 ou 19, 21, 23 au moins assimilables à une pièce extrême 5 ou 6 sont coplanaires, ils ne pourront pas être tous les trois parallèles.

Selon un mode privilégié de l'invention, ces axes seront disposés suivant une symétrie de révolution par rapport à un axe appartenant aux dites pièces extrêmes 5 ou 6. De plus, ils pourront être coplanaires.

De manière théorique, le mécanisme élémentaire 4 peut être modélisé par une structure réticulée (figure 2) dans laquelle les pièces extrêmes 5, 6 mais aussi les parties 10 à 15 constituant les branches 7 à 9 ont toutes la forme de structures triangulaires.

Chacune des trois barres 25, 26 et 27 ou 28, 29 et 30 des structures triangulaires modélisant les pièces extrêmes 5, 6 est confondue avec l'une des trois barres 25, 31 et 32 ou 26, 33 et 34 ou 27, 35 et 36 ou 28, 37 et 38 ou 29, 39 et 40 ou enfin 30, 41 et 42 des structures triangulaires modélisant chacune des parties 10 à 15 constituant les branches 7 à 9.

Le mécanisme élémentaire qui, de manière théorique, a ainsi été modélisé, peut avantageusement avoir des caractères de symétrie et être concrétisé par des dispositions constructives très diverses.

Le mécanisme élémentaire pourra être concrétisé sous une forme proche du modèle théorique défini à la figure 3, par l'emploi des pièces monoblocs 5, 6, 10 à 15 qui peuvent être considérées comme rigides vis à vis des efforts auxquels elles sont soumises en fonctionnement.

En particulier, si les efforts exercés sur les parties 10 à 15 formant les branches 7 à 9 ne sont dûs qu'aux actions de liaison d'ordre interne (poids propres négligés) ces parties pourront être simplement rigides dans leurs plans.

Le mécanisme élémentaire pourra être concrétisé sous une forme proche du modèle théorique défini à la figure 2, par l'emploi, aux lieu et place des barres 25 à 42, de composants (non représentés) qui, en fonctionnement, leur sont assimilables et ce, que ces composants soient d'une longueur qui est constante ou qui, par réglage ou déformation contrôlée, est variable.

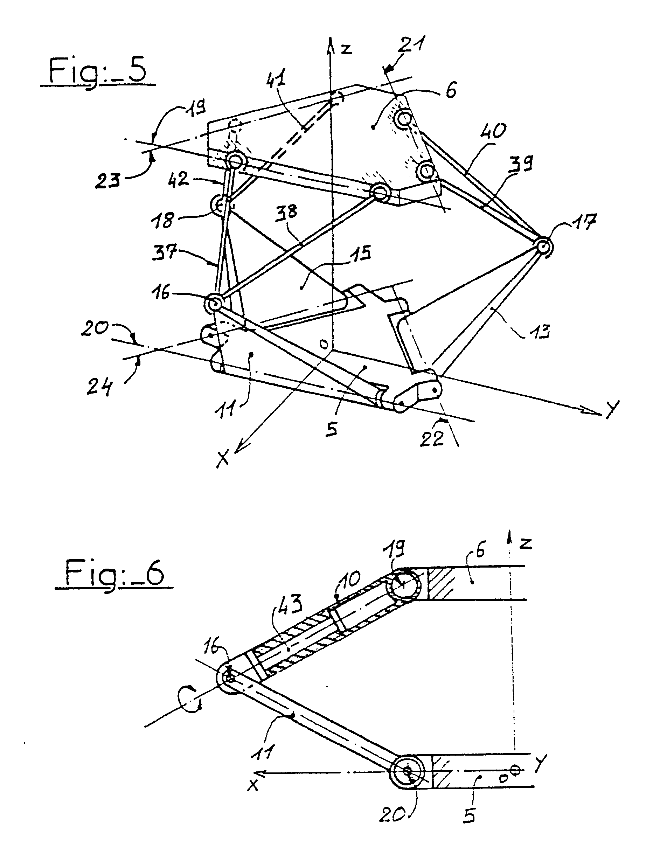

Le mécanisme élémentaire pourra être concrétisé sous une forme mixte dérivée des deux modèles théoriques précédemment décrits où, par exemple, les pièces 10 à 15 peuvent, toutes ou en partie, être matérialisées par des barres 31 à 36, 37 à 42 (figure 5).

En fonction de l'amplitude des mobilités et de la précision requises, les liaisons telles que les liaisons rotoïdes 19 à 24 ou les liaisons sphériques 16, 17 et 18 peuvent être matérialisées sous la forme d'articulations utilisant des composants classiques de liaison (coussinets, roulements, rotules lisses, etc ...) ou utiliser des jonctions souples à flexibilité orientée.

Dans le cas où entre les pièces extrêmes 5 et 6 des débattements angulaires importants sont nécessaires suivant des axes horizontaux perpendiculaires entre eux X et Y, il est possible de concrétiser les liaisons sphériques 16, 17 et 18 sous la forme de joints d'accouplements cinématiquement qui ne sont qu'équivalents à des liaisons sphériques, au moyen de pièces 43, 44 intercalées entre les parties 10 et 11, 12 et 13, 14 et 15 constituant les branches.

Par exemple, il s'agira (figure 6) d'une pièce d'accouplement 43 liée à l'une des parties précitées par une liaison rotoïde et à l'autre partie par une rotule lisse dont le centre est situé sur l'axe de la liaison rotoïde, ce qui permettra d'obtenir une amplification du débattement angulaire de la rotule suivant l'axe de l'articulation rotoïde. La mobilité supplémentaire suivant l'axe de l'articulation rotoïde que constitue la rotation indépendante de la pièce ainsi intercalée 43 n'influence pas la cinématique globale du mécanisme.

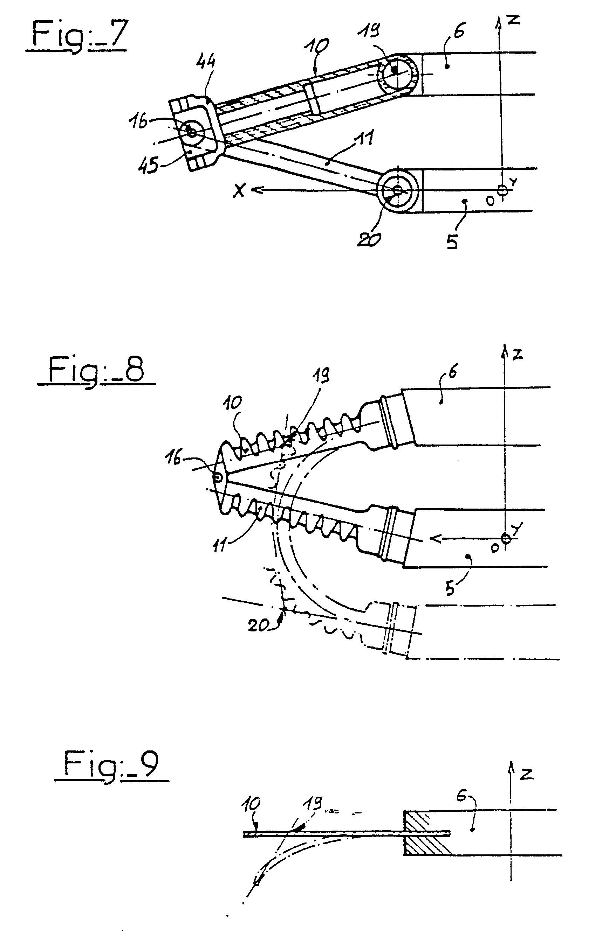

Dans un autre exemple, il s'agira de deux pièces d'accouplement 44 et 45 intercalées (figure 7) entre les parties des branches de manière que les trois liaisons successives (tout d'abord entre la première partie de branche et la première de ces pièces d'accouplement puis entre les deux pièces d'accouplement 44, 45 et enfin entre la deuxième pièce d'accouplement et la deuxième partie 11 de la branche) soient du type rotoïde (montage à la cardan), les axes de ces trois liaisons rotoïdes étant de préférence concourants bien que cela ne soit pas une nécessité.

Le mécanisme élémentaire pourra également être concrétisé (figure 8) sous une forme dérivée du modèle défini à la figure 3 par l'emploi dans les branches 7 à 9 de parties 10 à 15 qui sont toutes ou partiellement réalisées sous la forme de pièces incurvables à flexibilité orientée, dont la courbure ne dépend quasisment que d'un seul paramètre telles que des structures gonflables ou des lames élastiques.

Dans une telle disposition constructive où chacune des parties 10, 12 et 14 ou 11, 13 et 15 formant les branches est réalisée sous la forme d'une pièce à flexibilité orientée, on peut considérer que l'articulation avec la pièce extrême correspondante 6 ou 5, s'effectue autour d'un axe virtuel 19, 21, 23 ou 20, 22, 24 dont la position par rapport à cette même pièce extrême dépend de la déformation de la partie concernée (figures 8 et 9).

Comme indiqué plus haut, le mécanisme polyarticulé peut être constitué d'une juxtaposition, par leurs pièces extrêmes 5, 6 d'un nombre quelconque de mécanismes élémentaires 4 qui, de préférence, seront géométriquement semblables et même de dimensions identiques.

Chaque mécanisme 4 ayant trois degrés de mobilité, une structure de liaison (figure 4) qui, pour relier deux pièces extrêmes 1, 2 serait composée d'un nombre "N" de ces mécanismes élémentaires 4, posséderait évidemment une mobilité égale à trois fois, le nombre "N".

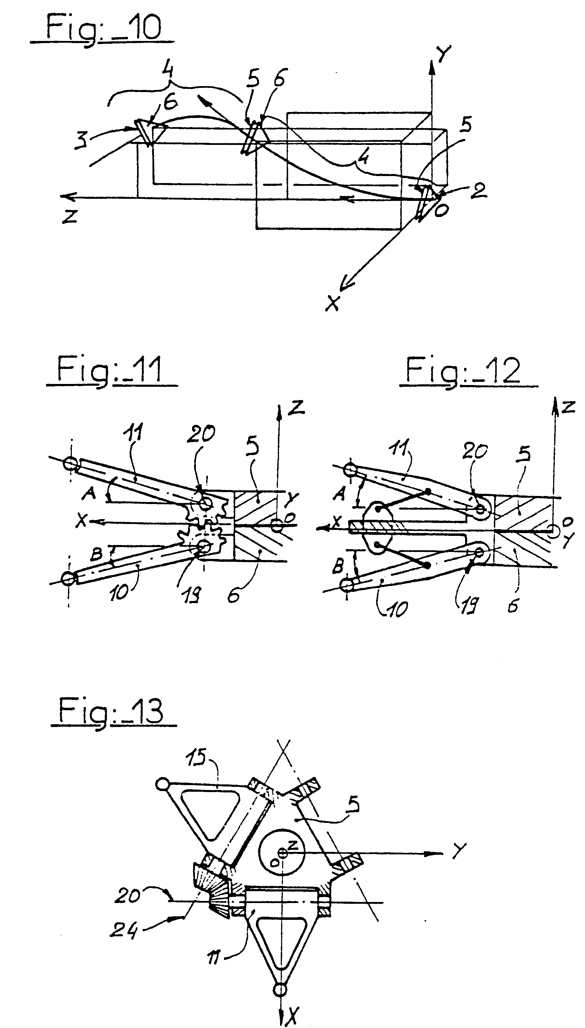

Dans le cas où le mécanisme polyarticulé résulte de la juxtaposition en vis à vis de plusieurs mécanismes élémentaires 4 par leurs pièces extrêmes 5, 6 il peut être modélisé au niveau de sa fibre moyenne par une succession d'arcs de cercle de rayons variables ayant des tangentes communes, en chaque point de raccordement (voir figure 10 un ensemble de deux tronçons).

Le comportement cinématique de chaque mécanisme élémentaire peut être indépendant de celui des mécanismes voisins ou en être dépendant de manière que l'angle "A" entre le plan d'une pièce extrême 5 ou 6 et celui d'une partie 10 à 15 articulée sur cette pièce extrême soit fonction de l'angle "B" entre le plan de l'autre pièce extrême 6 ou 5 juxtaposée et le plan de la partie correspondante 10 à 15 articulée sur cette autre pièce extrême 6 ou 5 (figures 4, 11 et 12).

Afin de faciliter ce couplage cinématique éventuel, les pièces extrêmes 5, 6 par lesquelles deux mécanismes élémentaires 4 se juxtaposent seront avantageusement orientées l'une par rapport à l'autre, de manière telle que les axes des articulations rotoïdes 19 à 24 soient parallèles deux à deux. Dans ce cas, le couplage cinématique de deux mécanismes élémentaires juxtaposés pourra être réalisé par des mécanismes plans classiques.

Evidemment, ce couplage cinématique d'au moins certaines des parties 10 à 15 d'au moins deux mécanismes élémentaires voisins réduit le nombre de degrés de mobilité de l'ensemble du mécanisme.

Au couplage cinématique de mécanismes juxtaposés peut encore s'ajouter un couplage cinématique de parties entrant dans la constitution d'un même mécanisme élémentaire, et ce, par exemple au moyen d'engrenages coniques (figure 13).

La fixation des paramètres définissant l'état géométrique du mécanisme global peut être due à des actions mécaniques agissant de l'intérieur et/ou de l'extérieur du mécanisme.

Si les actions mécaniques qui définissent l'état géométrique du mécanisme global agissent de l'intérieur du mécanisme, celles-ci seront exercées par des actionneurs mecaniques (non représentés) agissant sur des pièces constitutives du mécanisme, directement ou indirectement par l'intermédiaire de transmetteurs (mécanismes divers, tringleries, liens flexibles inextensibles maintenus en tension, etc...)

Ces actionneurs pourront être de tout type connu (actionneurs linéaires, rotatifs, structure gonflable) utilisant une source d'énergie quelconque et fonctionnant suivant une loi de mouvement quelconque.

Un cas particulier sera obtenu avec des actionneurs dont la loi de mouvement pendant une période donnée consiste dans le repos.

Au niveau d'un mécanisme élémentaire tel que 4, les trois degrés de mobilité peuvent être fixés par trois actionneurs avantageusement identiques dont l'action consiste par exemple pour chacun d'entre eux à contrôler directement ou indirectement:

- la distance entre deux points quelconques appartenant aux pièces extrêmes 5 et 6 ou
- la distance entre deux points quelconques appartenant aux deux parties d'une même branche 7, 8, 9 ou
- la distance entre deux points quelconque appartenant à deux parties de branches différentes,

- la rotation relative d'une partie 10 à 15 de branches par rapport à la pièce extrême correspondante 5 ou 6.

Dans le cas cité plus haut où une partie 11 de branche est réalisée sous la forme d'une structure à flexibilité orientée comme par exemple une structure gonflable ou une lame élastique, une telle pièce peut être le siège d'un phénomène physico-chimique entraînant sa déformation contrôlée. On peut alors considérer qu'une telle partie est sont propre actionneur.

A un instant donné, les actionneurs pourront être commandés simultanément ou en nombre limité. Ils pourront avantageusement être pilotés par des moyens d'asservissement.

Aux lieu et place ou en combinaison avec ces actionneurs, l'ensemble pourra avantageusement comprendre des capteurs de déplacement (non représentés) tels par exemple un potentiomètre ou un codeur optique dont la commande par l'articulation d'une partie 10 à 15 de branche par rapport à la pièce extrême associée 5 ou 6 modifiera les caractéristiques d'un signal qui pourra être enregistré et/ou comparé à un signal antérieur ou à une consigne pour piloter les actionneurs.

Si les actions mécaniques qui définissent l'état géométrique du mécanisme global agissent de l'extérieur du mécanisme, celles-ci peuvent comme il a été vu plus haut, entraîner la déformation contrôlée de certaines pièces constitutives du mécanisme. Il en sera de même des actionneurs mécaniques ou de leurs transmetteurs.

Cette déformabilité d'au moins l'un des éléments que sont ces parties et ces actionneurs permet de réaliser des ensembles à déformation contrôlée.

L'ensemble ainsi obtenu présente de nombreux avantages:

- il est extensible et rétractile,
- en un point quelconque de sa fibre moyenne, il est incurvable dans tous les plans contenant la tangente à cette fibre moyenne, d'où l'absence de points morts,
- son amplitude d'incurvation peut être augmentée à volonté par juxtaposition de mécanismes élémentaires,
- ses mécanismes élémentaires peuvent être couplés par des mécanismes plans classiques,
- ses symétries réduisent le nombre de types de pièces, d'assemblages, d'actionneurs, de capteurs,
- la symétrie interne de chaque mécanisme élémentaire et la juxtaposition de tels mécanismes rend la commande d'une structure possédant un nombre de degrés de mobilité élevé relativement simple par l'utilisation d'allures propagatoires:
- il offre un facteur d'échelle favorable, en effet, à partir de certaines dimensions il est possible de réaliser des structures assimilables à des structures réticulées, ce qui est performant du point de vue de la rigidité et de la résistance par rapport à la masse et à l'inertie qui sont réduites; il sera d'autre part possible d'incorporer les actionneurs dans la structure,

- il n'imprime pas de rotation relative des sections suivant la tangente à la fibre moyenne d'où la possibilité de réaliser l'étanchéité sans joint tournant et la possibilité de transmettre un moment de torsion entre les pièces extrêmes compte tenu d'une fibre moyenne géométriquement imposée; de plus, si les demi-éléments de chaque mécanisme élémentaire sont structurellement symétriques et identiques, il y aura homocinétisme,

- l'étanchéité, en offrant une âme centrale creuse, il permet le passage de cables, tuyaux; pour de grandes dimensions, l'espace central peut même constituer un champ d'intervention.

Du fait de ces nombreux avantages, l'ensemble se prête à des applications très variées, telles par exemple:

- comme trompes ou poignets-trompe utilisés en robotique pour lesquels le mécanisme étant rétractile et offrant une grande amplitude d'orientation entre ses pièces extrêmes, le champ d'intervention du mécanisme est un volume et permet à partir d'une fenêtre d'accès de dimensions réduites, de décrire tout courbe ou surface incluse dans ce champ d'intervention,

- comme raccord orientable sans joint tournant,

- comme joint d'accouplement extensible homocinétique pour lequel le facteur d'échelle est favorable,

- comme dispositifs d'accostage et d'ancrage à déformation contrôlée passifs ou actifs,

- comme véhicules tout-terrain à locomotion péristaltique, par arpentage ou par culbute pour lesquels le mécanisme proposé constitue une solution idéale tant du point de vue mécanique (cinématique spatiale, symétrie des mobilités, similitude des pièces constitutives, morphologie configurable, énergie dépensée réduite) qu'au point de vue de la commande (nombre de paramètres manipulés à chaque instant réduit, permutation possible des ordres donnés aux actionneurs au sein de chaque mécanisme élémentaire, allures propagatoires),

- comme manipulateurs sous-marins ou spatiaux; l'une des pièces extrêmes étant prise comme référentiel, l'autre pièce extrême peut, à l'aide d'un dispositif approprié, réaliser la préhension d'un objet; la configuration géométrique du mécanisme reliant alors l'objet au référentiel peut être aisément déterminée et un mouvement peut aisément être communiqué à l'objet compte tenu de certaines contraintes cinématiques. Il est notamment possible de rétracter la structure suivant le tunnel spatial qu'elle occupe. Des manutentions à caractère propagatoire peuvent être assurées par l'ame centrale (péristaltiques) ou extérieurement à la structure,

- comme engin de franchissement ou de sauvetage. Des structures gonflables insubmersibles pourrait permettre le passage de personnels dans l'âme centrale,

- comme mâts érectables pour lesquels le mécanisme proposé permet une extension sans rotation relative des faces et un déploiement soit de tous les éléments à la fois, soit de parties successives en commencant par les éléments inférieurs les plus chargés,

- comme plateformes élévatrices et orientables:

. en tant que supports d'objets, notamment dans le domaine des manipulateurs du type positionneur pour opérations de montage, de soudage, de parachèvement, etc..

. en tant que supports d'appareils, le mouvement de translation permettant de réaliser des accostages fins (support de poste de soudage),

- comme tourelle ne nécessitant pas une orientation angulaire fixe de la face extrême suivant la normale (tourelles supports de canon, missile, caméra, projecteur, réflecteur, antenne, capteur de rayonnement, laser, jet de fluide en projection ou en aspiration. Pour de telles applications, la possibilité d'une rotation continue en gisement ne nécessitant pas de joint tournant au niveau de la base, entraîne une simplification des connections électriques, hertziennes, optiques, fluidiques, et des dispositifs d'étanchéité en milieu hostile. L'absence de points morts (possibilité de balayage continu dans deux plans de site orthogonaux) et l'inertie réduite (facteur d'échelle favorable) sont également des avantages.

Le mouvement de translation peut être utilisé pour escamoter l'appareil ou être éventuellement neutralisé par une barre supplémentaire reliant par exemple les centres des pièces extrêmes.

**Revendications**

1. Mécanisme polyarticulé rétractile (1) formant une structure de liaison entre deux pièces extrêmes (2, 3), dont l'une est prise comme référentiel, CARACTERISE en ce qu'il comprend au moins un mécanisme élémentaire (4) constitué de deux pièces extrêmes (5, 6), dont un référentiel, et, pour relier entre elles ces pièces extrêmes (5, 6) au moins trois branches (7, 8, 9) situées dans des plans distincts et composées de deux parties (10 et 11 ou 12 et 13 ou 14 et 15) associées chacune d'une part, à l'autre partie formant la même branche par une liaison assimilable à une liaison sphérique (16, 17 et 18) et, d'autre part, à une pièce extrême (5, 6) différente de celle à laquelle est associée cette autre partie par une liaison assimilable à une liaison rotoïde (soit 19 ou 20, soit 21 ou 22, soit enfin 23 ou 24).

2. Mécanisme polyarticulé rétractile selon la revendication 1 caractérisé en ce que l'un au moins des éléments que sont les pièces extrêmes (5, 6) et les parties (10 à 15) constituant les branches (7 à 9) a la forme d'une structure consistant en une pièce monobloc (5, 6 et 10 à 15) assimilable à une pièce rigide vis à vis des sollicitations mécaniques auxquelles elle est soumise.

3. Mécanisme polyarticulé rétractile selon la revendication 1 ou 2 caractérisé en ce que l'un au moins des éléments que sont les pièces extrêmes (5, 6) et les parties 10 à 15) constituant les branches (7 à 9) a la forme d'une structure réticulée triangulaire dont les composants consistent en des moyens (25 à 42) qui en fonctionnement sont assimilables à des barres.

4. Mécanisme polyarticulé rétractile selon l'une quelconque des revendications 1 à 3 caractérisé en ce que l'une au moins des parties (10 à 15) constituant les branches (7 à 9) a la forme d'une structure incurvable à flexibilité orientée et dont on peut considérer que la courbure ne dépend que d'un paramètre.

5. Mécanisme polyarticulé rétractile selon l'une quelconque des revendications 1 à 4 caractérisé en ce qu'il comprend plusieurs mécanismes élémentaires (4) qui sont juxtaposés par leurs pièces extrêmes (5, 6).

6. Mécanisme polyarticulé selon la revendication 5 caractérisé en ce qu'entre au moins certains des mécanismes élémentaires est intercalé au moins un élément intercalaire de structure différente.

7. Mécanisme polyarticulé rétractile selon la revendication 5, caractérisé en ce que les pièces extrêmes (5, 6) sont en vis à vis.

8. Mécanisme polyarticulé rétractile selon les revendications 5 ou 7 caractérisé en ce qu'il comprend au moins un moyen de couplage cinématique entre au moins certains de ses mécanismes élémentaires (4).

9. Mécanisme polyarticulé rétractile selon la revendication 7 ou 8 caractérisé en ce que les pièces extrêmes (5, 6) par lesquelles deux mécanismes élémentaires (4) se juxtaposent sont, l'une par rapport à l'autre, orientées de manière telle que leurs articulations rotoïdes (19 à 24) respectives soient parallèles deux à deux.

10. Mécanisme polyarticulé rétractile selon l'une quelconque des revendications 1 à 9 caractérisé en ce qu'au moins l'un des mécanismes élémentaires (4) comprend au moins un moyen de couplage cinématique entre des éléments intérieurs à ce mécanisme élémentaire.

11. Mécanisme polyarticulé rétractile selon l'une quelconque des revendications 1 à 10 caractérisé en ce qu'il comprend des actionneurs déterminant les positions relatives des éléments que sont les pièces extrêmes (5, 6) et les parties (10 à 15) de branches (7 à 9) de chaque mécanisme élémentaire (4).

12. Mécanisme polyarticulé rétractile selon l'une quelconque des revendications 1 à 11 caractérisé en ce qu'il comprend des capteurs des positions relatives des éléments que sont les pièces extrêmes (5, 6) et les parties (10 à 15) de branches (7 à 9) de chaque mécanisme élémentaire (4).

13. Mécanisme polyarticulé rétractile selon la revendication 11 ou 12 caractérisé en ce qu'au moins certains des composants que sont les actionneurs et les capteurs sont reliés à des moyens d'asservissement.

## Patentansprüche

1. Mehrgelenkiger faltbarer Mechanismus (1), der eine Ausbildung zur Verbindung zwischen zwei äußeren Teilen (2, 3) bildet, von denen eines als Bezug genommen wird,
dadurch gekennzeichnet,
daß er zumindest einen Grundmechanismus (4), der aus zwei äußeren Teilen (5, 6) mit einem Bezugsteil gebildet ist, und zur Verbindung zwischen diesen äußeren Teilen (5, 6) zumindest drei Zweige (7, 8, 9) aufweist, die in verschiedenen Ebenen angeordnet sind und aus zwei Teilen (10 und 11 oder 12 und 13 oder 14 und 15) bestehen, von denen jedes einerseits mit dem anderen, denselben Zweig durch eine mit einer sphärischen Verbindung (16, 17 und 18) vergleichbaren Verbindung bildenden Teil und andererseits mit einem anderen äußeren Teil (5, 6) als jenem verbunden ist, mit welchem dieses andere Teil durch eine einer Drehverbindung (19 oder 20, 21 oder 22, 23 oder 24) vergleichbaren Verbindung verbunden ist.

2. Mehrgelenkiger faltbarer Mechanismus nach Anspruch 1,
dadurch gekennzeichnet,
daß zumindest eines der Elemente, die die äußeren Teile (5, 6) sind, und die die Zweige (7 bis 9) bildenden Teile (10 bis 15) die Form einer Ausbildung aufweisen, die damit ein einstückiges Teil (5, 6 und 10 bis 15) bildet, vergleichbar mit einem gegenüber mechanischen Beanspruchungen starren Teil, denen dieses ausgesetzt ist.

3. Mehrgelenkiger faltbarer Mechanismus nach Anspruch 1 oder 2,
dadurch gekennzeichnet,
daß zumindest eines der Elemente, die die äußeren Teile (5, 6) sind, und die die Zweige (7 bis 9) bildenden Teile (10 bis 15) die Form einer dreieck-netzförmigen Ausbildung aufweist, deren Bestandteile aus Mitteln (25 bis 42) bestehen, die in ihrer Funktion mit Stangen vergleichbar sind.

4. Mehrgelenkiger faltbarer Mechanismus nach einem der Ansprüche 1 bis 3,
dadurch gekennzeichnet,
daß zumindest eines der Teile (10 bis 15), die die Zweige (7 bis 9) bilden, die Form einer krümmbaren Ausbildung mit orientierter Nachgiebigkeit aufweist, und von der man ausgehen kann, daß die Krümmung nur von einem Parameter abhängt.

5. Mehrgelenkiger faltbarer Mechanismus nach einem der Ansprüche 1 bis 4,
dadurch gekennzeichnet,
daß er mehrere Grundmechanismen (4) aufweist, die mit ihren äußeren Teilen (5, 6) nebeneinanderliegend angeordnet sind.

6. Mehrgelenkiger Mechanismus gemäß Anspruch 5,

dadurch gekennzeichnet,
daß zwischen wenigstens einem Teil der Grundmechanismen zumindest ein Zwischenelement mit unterschiedlicher Ausbildung eingesetzt ist.

7. Mehrgelenkiger faltbarer Mechanismus nach Anspruch 5,
dadurch gekennzeichnet,
daß die äußeren Teile (5, 6) vis à vis zueinander angeordnet sind.

8. Mehrgelenkiger faltbarer Mechanismus nach einem der Ansprüche 5 bis 7,
dadurch gekennzeichnet,
daß er zumindest ein kinematisches Kupplungsmittel zwischen zumindest einem Teil seiner Grundmechanismen (4) aufweist.

9. Mehrgelenkiger faltbarer Mechanismus nach Anspruch 7 oder 8,
dadurch gekennzeichnet,
daß die äußeren Teile (5, 6), durch welche zwei Grundmechanismen (4) nebeneinander liegen, zueinander derart ausgerichtet sind, daß ihre jeweiligen Drehgelenke (19 bis 24) paarweise zueinander parallel sind.

10. Mehrgelenkiger faltbarer Mechanismus nach einem der Ansprüche 1 bis 9,
dadurch gekennzeichnet,
daß zumindest einer der Grundmechanismen (4) zumindest ein kinematisches Kupplungsmittel zwischen den inneren Elementen in diesem Grundmechanismus aufweist.

11. Mehrgelenkiger faltbarer Mechanismus nach einem der Ansprüche 1 bis 10,
dadurch gekennzeichnet,
daß er Betätigungsgeräte aufweist, die die Relativlagen der Elemente bestimmt, die die äußeren Teile (5, 6) und die Teile (10 bis 15) der Zweige (7 bis 9) jedes Grundmechanismus (4) sind.

12. Mehrgelenkiger faltbarer Mechanismus nach einem der Ansprüche 1 bis 11,
dadurch gekennzeichnet,
daß er Meßzellen für die Relativlagen der Elemente aufweist, die die äußeren Teile (5, 6) und die Teile (10 bis 15) der Zweige (7 bis 9) jedes Grundmechanismus (4) sind.

13. Mehrgelenkiger faltbarer Mechanismus nach Anspruch 11 oder 12,
dadurch gekennzeichnet,
daß wenigstens einige der Bestandteile, nämlich die Betätigungsgeräte und die Meßzellen, mit Steuermitteln verbunden sind.

**Claims**

1. Retractile, polyarticulated mechanism (1) serving as a connecting assembly between two end pieces (2, 3) one of which is considered referential characterised in that it comprises at least one elementary mechanism (4) consisting of two end pieces (5, 6), of which one is a referential part, and for the mutual connection of said end pieces (5, 6) at least three legs (7, 8, 9) situated in distinct planes and each being composed of two portions (10 and 11 or 12 and 13 or 14 and 15) each associated with, on the one hand, the other portion of the same leg by a joint similar to a ball joint (16, 17 and 18) and, on the other hand, a different end piece (5, 6) from that with which said other portion is associated by a joint comparable to a rotoid joint (either 19 or 20 or 21 or 22, or, finally, 23 or 24).

2. Retractile polyarticulated mechanism according to claim 1, characterised in that at least one of the elements, which are the end pieces (5, 6) and the portions (10 to 15) making up the legs (7 to 9), has the form of a structure consisting of a solid piece (5, 6 and 10 to 15) comparable to a rigid part in regard to mechanical stresses to which it is subjected.

3. Retractile polyarticulated mechanism according to claim 1 or 2, characterised in that at least one of the elements, which are the end pieces (5, 6) and the portions (10 to 15) making up the legs (7 to 9), has the form of a reticulated triangular structure of which the component parts consist of means (25 to 42) which are functionally comparable to bars.

4. Retractile polyarticulated mechanism according to any one of claims 1 to 3, characterised in that at least one of the portions (10 to 15) which make up the legs (7 to 9) has the form of a structure which is capable of curving inwards with orientated flexibility and of which it may be considered that the curvature depends on one parameter only.

5. Retractile polyarticulated mechanism according to any one of claims 1 to 4, characterised in that it comprises several elementary mechanisms (4) which are juxtaposed by their end pieces (5, 6).

6. Polyarticulated mechanism according to claim 5, characterised in that between at least some of the elementary mechanisms there is arranged at least one intervening piece of different structure.

7. Retractile polyarticulated mechanism according to claim 5, characterised in that its end pieces (5, 6) are face-to-face.

8. Retractile polyarticulated mechanism according to claims 5 or 7, characterised in that it comprises at least one kinematic coupling means between at least some of its elementary mechanisms (4).

9. Retractile polyarticulated mechanism according to claim 7 or 8, characterised in that the end pieces (5, 6) whereby two units (4) face one another are relatively orientated so that their respective rotoid joints (19 to 24) are parallel two-by-two.

10. Retractile polyarticulated mechanism according to any one of claims 1 to 9, characterised in that at least one of the elementary mechanisms (4) comprises at least one kinemetic coupling means between the interior elements of said elementary mechanism.

11. Retractile polyarticulated mechanism according to any one of claims 1 to 10, characterised in that it comprises drivers determining the relative positions of the elements such as the end pieces (5, 6) and the portions (10 to 15) of the legs (7 to 9) of each elementary mechanism (4).

12. Retractile polyarticulated mechanism according to any one of claims 1 to 11, characterised in that it comprises pick-ups for the relative positions of the component elements such as the end pieces (5, 6) and the portions (10 to 15) of the legs (7 to 9) of each elementary mechanism (4).

13. Retractile polyarticulated mechanism according to claim 11 or 12, characterised in that at least some of the components such as the drivers and the pick-ups are connected to control means.

Fig:_1

Fig:_2

Fig:_3

Fig:_4

Fig:_5

Fig:_6

0 172 291

Fig._7

Fig._8

Fig._9

7

## Fig. 10

## Fig. 11

## Fig. 12

## Fig. 13